## Europäisches Patentamt

## European Patent Office

## Office européen des brevets

(19)

(11) Numéro de publication: **0 177 930**
**A1**

(12) **DEMANDE DE BREVET EUROPEEN**

(21) Numéro de dépôt: **85112726.6**

(22) Date de dépôt: **08.10.85**

(51) Int. Cl.⁴: **F 02 B 43/08,** F 02 B 37/00

(30) Priorité: **10.10.84 FR 8415546**

(43) Date de publication de la demande: **16.04.86**
**Bulletin 86/16**

(84) Etats contractants désignés: **BE CH DE FR GB IT LI NL SE**

(71) Demandeur: **SOCIETE D'ETUDES DE MACHINES THERMIQUES S.E.M.T., 2, Quai de Seine, F-93202 Saint-Denis (FR)**

(72) Inventeur: **Daugas, Claude, 2, rue Ernest Renan, F-78340 Les Clayes Sous Bois (FR)**

(74) Mandataire: **Weinmiller, Jürgen et al, Zeppelinstrasse 63, D-8000 München 80 (DE)**

(54) **Installation à gazogène pour un moteur à combustion interne suralimenté.**

(57) La présente invention concerne une installation à gazogène comprenant, un moteur à combustion interne (1) comportant un ensemble d'admission (3) d'un ensemble de cylindres (2) suralimenté par un premier compresseur (C1) relié à l'ensemble d'admission (3) par une canalisation (11) d'air de suralimentation, un gazogène (20) alimenté en air comprimé comburant et/ou véhicule de combustible par un deuxième compresseur (C2), et une turbine à gaz d'échappement (T) entraînant les deux compresseurs (C1, C2), caractérisée en ce que le deuxième compresseur (C2) prélève son air par une canalisation (12) d'entrée d'air branchée sur la canalisation (11) d'air de suralimentation, en aval du premier compresseur (C1), et en ce que la sortie du gazogène (20) est reliée directement à l'ensemble d'admission du moteur par une canalisation (15) d'alimentation en gaz.

Application aux moteurs à combustion interne suralimentés, notamment aux moteurs Diesel.

## Installation à gazogène pour un moteur à combustion interne suralimenté

La présente invention concerne une installation à gazogène comportant un moteur à combustion interne suralimenté par un turbo-compresseur et alimenté en gaz combustible par un gazogène lui-même alimenté en air comprimé comburant et/ou véhicule de combustible par un compresseur, donc alimenté soit en air comprimé comburant, soit en air comprimé véhiculant un combustible parexemple du charbon pulvérisé, soit par les deux.

Dans les moteurs à combustion interne suralimentés dont l'alimentation en gaz combustible est assurée par des gazogènes, la technique évolue actuellement depuis l'utilisation de gazogènes en dépression ou en surpression de quelques décimètres d'eau vers l'utilisation de gazogènes alimentés en air sous des pressions plus élevées.

Par rapport aux premiers types, ces gazogènes surpressés occupent un volume moindre, fournissent une puissance identique ainsi qu'un meilleur temps de réponse aux variations de charge du moteur.

On connaît par le document FR 2 541 722 une installation à gazogène comprenant un moteur à combustion interne suralimenté par un premier turbocompresseur et un gazogène alimenté en air comprimé par un deuxième turbocompresseur.

Le compresseur de ce deuxième turbocompresseur prend son air dans l'atmosphère et, pour alimenter le gazogène à une pression suffisante compensant la perte de charge due à la présence à la sortie du gazogène d'une station de traitement du gaz combustible, le compresseur de ce deuxième turbocompresseur doit être un compresseur plus puissant, notamment à deux étages, conduisant à un faible rendement global de l'installation.

De plus, dans cette installation, l'alimentation du moteur en mélange air/gaz combustible se fait au moyen du compresseur du premier turbocompresseur. Ce compresseur est donc traversé par le mélange airgaz combustible et ainsi les risques d'encrassement sont grands.

La présente invention a pour but de supprimer ces deux inconvénients, en augmentant le rendement global de l'installation par l'utilisation d'un deuxième compresseur prélevant son air par dérivation en aval du compresseur de suralimentation du moteur, et en évitant un encrassement de ce compresseur de suralimentation du moteur par l'injection du débit de gaz issu du gazogène en aval de ce compresseur et éventuellement du ou des réfrigérants d'air.

La présente invention a pour objet une installation à gazogène comprenant, un moteur à combustion interne comportant un ensemble d'admission d'un ensemble de cylindres suralimenté par un premier compresseur relié à l'ensemble d'admission par une canalisation d'air de suralimentation, un gazogène alimenté en air comprimé comburant et/ou véhicule de combustible par un deuxième compresseur, et une turbine à gaz d'échappement entraînant les deux compresseurs, caractérisée en ce que le deuxième compresseur prélève son air par une canalisation d'entrée d'air branchée sur la canalisation d'air de suralimentation en aval du premier compresseur, et en ce que la sortie du gazogène est reliée directement à l'ensemble d'admission du moteur par une canalisation d'alimentation en gaz.

Selon un autre mode de réalisation, le moteur comporte deux turbines entraînées par les gaz d'échappement du moteur et reliées chacune à un compresseur, les deux turbines étant branchées en parallèle.

Il est décrit ci-après, à titre d'exemple et en référence aux dessins annexés, une installation selon deux modes de réalisation de l'invention.

La figure 1 représente, schématiquement, une installation à gazogène comprenant un moteur à combustion interne dans lequel les deux compresseurs sont entraînés par une turbine unique.

La figure 2 représente une variante de la figure 1, dans laquelle les deux compresseurs sont reliés chacun à une turbine.

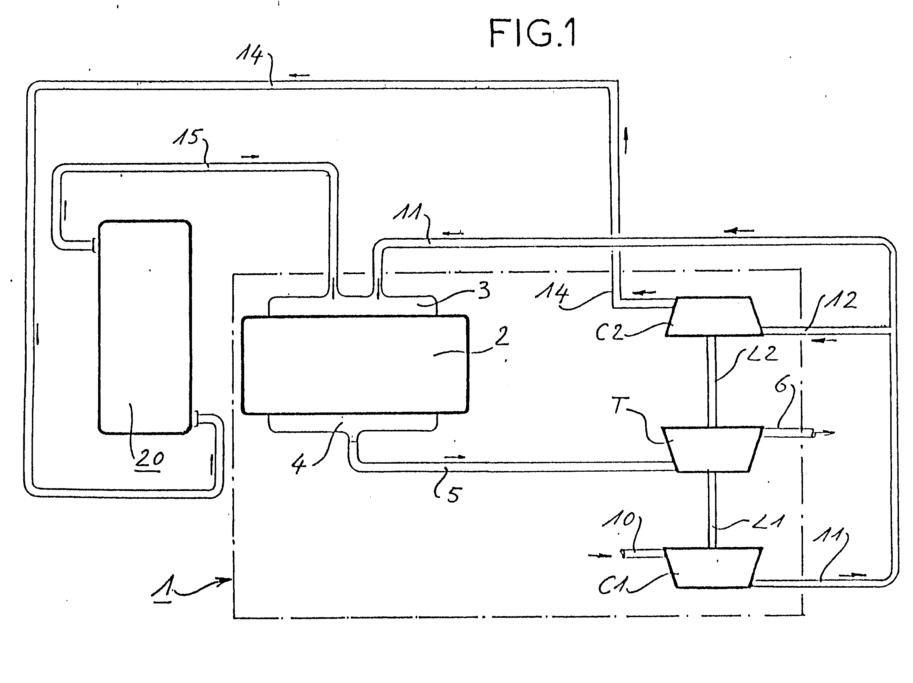

Dans la figure 1, le moteur 1 comporte un ensemble de cylindres 2 alimentés en air comburant et en gaz combustible par un ensemble d'admission 3.

L'ensemble d'admission 3 peut être unique ou divisé en deux collecteurs distincts, l'un pour distribuer l'air de combustion venant d'une canalisation 11, l'autre pour distribuer le gaz venant d'une canalisation 15 aux différents cylindres. Les gaz brûlés sortant de l'ensemble de cylindres 2 sont expulsés dans un collecteur d'échappement 4 relié à une turbine T par une canalisation 5.

Un premier turbocompresseur T, C1 est constitué de la turbine T et d'un compresseur C1 aspirant l'air extérieur par une canalisation 10, le compresseur C1 et la turbine T étant reliés par une liaison mécanique L1. Les gaz d'échappement sont rejetés dans l'atmosphère par une canalisation 6. La sortie du compresseur C1 est reliée à l'ensemble d'admission 3, pour l'alimentation de l'ensemble de cylindres 2 en air comprimé, par une canalisation d'alimentation 11. Une canalisation de dérivation 12, destinée à l'alimentation en air d'un gazogène 20 est branchée sur la canalisation d'alimentation 11 en aval du compresseur C1.

Un deuxième turbocompresseur T,C2 est constitué de la turbine T et d'un compresseur C2 dont l'entrée reçoit la canalisation 12, le compresseur C2 et la turbine T étant reliées par une liaison mécanique L2. La sortie de ce compresseur C2 est reliée au gazogène 20 par une canalisation 14. Ce gazogène 20 peut comporter un dispositif auxiliaire tel qu'un cyclone d'épuration.

La sortie du gazogène est reliée à l'ensemble d'admission 3 par une canalisation 15 de sorte que le compresseur C1 et les éventuels réfrigérants d'air sont à l'abri de la pollution par les goudrons bien souvent contenus dans les gaz de gazogène, ces goudrons pouvant être brûlés sans inconvénient dans les chambres de combustion et constituer un appoint énergétique non négligeable.

La canalisation 15 d'alimentation en gaz combustible du moteur, peut comporter un échangeur de chaleur traversé également par la canalisation 14 afin de réchauffer l'air circulant dans cette canalisation.

Bien entendu, l'installation peut comporter tous dispositifs auxiliaires connus tels que, par exemple, des réfrigérants, des épurateurs, ou, en amont du collecteur d'admission 3, un dispositif de contrôle de la puissance tel qu'un étranglement variable ou tel qu'un dispositif réglant le temps d'ouverture des soupapes d'admission.

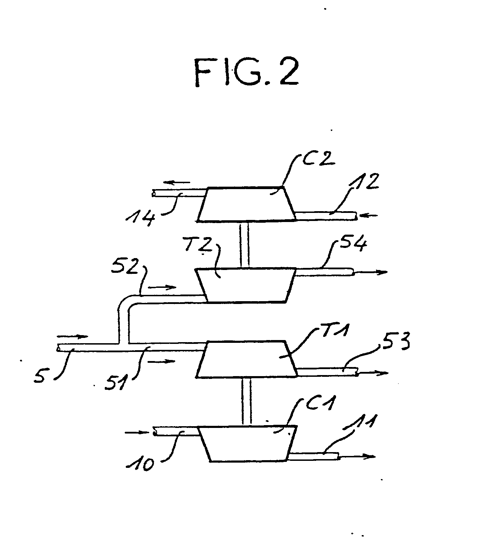

Dans le mode de réalisation de la figure 2 représentant une variante de la figure 1, l'entraînement des deux compresseurs C1, C2, s'effectue par deux turbines distinctes T1, T2. Le collecteur d'échappement 4 est relié à la canalisation 5 qui se sépare en deux canalisations distinctes 51, 52. La canalisation 51 est reliée à la turbine T1 et les gaz sont rejetés à l'extérieur de cette turbine par une canalisation 53. La canalisation 52 est reliée à la turbine T2 et les gaz sont rejetés à l'extérieur de la turbine par une canalisation 54. Les deux turbines T1, T2 sont donc montées en parallèle, des moyens connus de réglage du débit de gaz à travers lesdites turbines étant prévus.

Une installation fonctionne de la manière suivante :

L'air extérieur entre dans le compresseur C1 par la canalisation 10, puis cet air comprimé sort du compresseur par la canalisation 11. L'air se partage ensuite dans le prolongement de la canalisation 11 pour assurer la suralimentation du moteur, et dans la canalisation de dérivation 12 pour alimenter le gazogène. L'air comprimé passant dans la canalisation 12, traverse le compresseur C2 puis sort de ce compresseur à une pression plus élevée et alimente le gazogène par la canalisation 14. Le relèvement de pression effectué par le compresseur C2 ne porte donc que sur le débit utile au gazogène.

Le gaz combustible sortant du gazogène alimente le moteur par la canalisation 15 raccordée à l'ensemble d'admission 3.

Les gaz brûlés sortant du collecteur d'échappement 4 par la canalisation 5, entraînent la ou les turbines reliées mécaniquement aux compresseurs.

REVENDICATIONS

1/ Installation à gazogène comprenant, un moteur à combustion interne (1) comportant un ensemble d'admission (3) d'un ensemble de cylindres (2) suralimenté par un premier compresseur (C1) relié à l'ensemble d'admission (3) par une canalisation (11) d'air de suralimentation, un gazogène (20) alimenté en air comprimé comburant et/ou véhicule de combustible par un deuxième compresseur (C2), et une turbine à gaz d'échappement (T) entraînant les deux compresseurs (C1, C2), caractérisée en ce que le deuxième compresseur (C2) prélève son air par une canalisation (12) d'entrée d'air branchée sur la canalisation (11) d'air de suralimentation, en aval du premier compresseur (C1), et en ce que la sortie du gazogène (20) est reliée directement à l'ensemble d'admission du moteur par une canalisation (15) d'alimentation en gaz.

2/ Installation selon la revendication 1, caractérisée en ce que les deux compresseurs (C1, C2) sont reliés chacun à une turbine (T1,T2), les deux turbines (T1, T2) étant branchées en parallèle.

FIG.1

# FIG.2

![Office européen des brevets] **RAPPORT DE RECHERCHE EUROPEENNE**

**0 177 930**

EP 85 11 2726

## DOCUMENTS CONSIDERES COMME PERTINENTS

| Catégorie | Citation du document avec indication. en cas de besoin, des parties pertinentes | Revendication concernee | CLASSEMENT DE LA DEMANDE (Int Cl 4) |
|---|---|---|---|
| D,A | FR-A-2 541 722 (RENAULT) <br> * Page 7, lignes 6-21; page 8, lignes 5-26; figures 3,7 * | 1 | F 02 B 43/08 <br> F 02 B 37/00 |
| A | US-A-2 216 074 (GARVE) <br> * Page 1, alinéas 2-5; figures * | 1 | |
| A | FR-A-2 362 275 (SACM) <br> * Page 3, ligne 31 - page 4, ligne 5; figure 2 * | 2 | |

DOMAINES TECHNIQUES RECHERCHES (Int. Cl.4)

F 02 B

Le présent rapport de recherche a été établi pour toutes les revendications

| Lieu de la recherche | Date d'achèvement de la recherche | Examinateur |
|---|---|---|
| LA HAYE | | HAKHVERDIAN |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82